# FASCICULE DE BREVET EUROPEEN

(11) **EP 3 803 007 B1**
(45) Date de publication et mention de la délivrance du brevet: **09.09.2026**
(21) Numéro de dépôt: 19733668.8
(22) Date de dépôt: 24.05.2019
(51) Int. Cl.: E05B 85/18, E05B 81/78, E05B 17/10, B60Q 1/26, E05B 81/76, E05B 81/90

(54) **DISPOSITIF DE POIGNÉE D'OUVRANT, NOTAMMENT POUR VÉHICULE**
VORRICHTUNG FÜR EINEN ÖFFNUNGSPLATTENGRIFF, INSBESONDERE FÜR EIN KRAFTFAHRZEUG
DEVICE FOR AN OPENING PANEL HANDLE, IN PARTICULAR FOR A VEHICLE

(30) Priorité: 25.05.2018 FR 1854459
(43) Date de publication de la demande: 14.04.2021
(73) Titulaire: MINEBEA ACCESSSOLUTIONS ITALIA S.P.A., 10044 Pianezza (IT)
(72) Inventeur: GUERIN, Anthony, 10044 Pianezza (IT)
(74) Mandataire: Germain Maureau
(86) Numéro de dépôt international: PCT/EP2019/063513
(87) Numéro de publication internationale: WO 2019/224371

(56) Documents cités:
- EP-A1- 0 417 565
- EP-A1- 1 235 190
- WO-A1-2015/148788
- DE-A1- 102005 049 884
- FR-A1- 2 826 998
- FR-A1- 3 034 802
- JP-A- H01 182 478
- US-A- 4 653 143
- US-A1- 2005 057 050

## Description

La présente invention concerne le domaine des dispositifs de poignées pour ouvrants, notamment de véhicule automobile.

La présente invention concerne plus particulièrement le domaine des poignées du type « flush » équipant de tels ouvrants.

Un dispositif de poignée de type « flush » se caractérise en ce que la poignée mobile, notamment en pivotement et/ou translation, est affleurante à l'ouvrant dans une position de repos. Un tel dispositif de poignée permet notamment d'améliorer l'aspect esthétique extérieur, et le cas échéant l'aérodynamisme, de véhicule automobile.

A titre d'exemple, on connaît notamment le document WO 2014/049026 A1 qui décrit une poignée affleurant la carrosserie, qui comprend une lunette formant un cadre fixé à la portière et prévu pour recevoir un levier pour la préhension par un utilisateur. Le levier pivote par rapport au cadre entre une position de repos, dans laquelle le levier est affleurant au cadre, et une position active dans laquelle une partie du levier fait saillie du cadre. Un dispositif de poignée comprend généralement un moteur électrique commandant le déplacement du levier dans sa position de repos ou dans sa position active.

Un tel dispositif nécessite un agencement complexe d'éléments mécaniques et électriques en vue de permettre le guidage du levier dans sa position de repos ou sa position active.

De plus, ce dispositif de poignée présente l'inconvénient de dégrader prématurément ces éléments mécaniques du fait de l'exposition aux intempéries de la poignée.

Par ailleurs, selon la configuration du dispositif, le montage d'un tel dispositif est rendu difficile par l'assemblage en deux parties sur l'ouvrant du véhicule, à savoir une première partie comprenant la poignée assemblée depuis l'extérieur de l'ouvrant et une deuxième partie comprenant un support (10) de poignée assemblé depuis l'intérieur de l'ouvrant.

Le document FR 3 034 802 A montre un autre dispositif de poignée.

La présente invention a pour but de pallier au moins l'un des inconvénients précités en proposant un dispositif de poignée simplifié permettant de protéger ladite poignée des intempéries.

A cet effet, l'invention a pour objet un dispositif de poignée d'ouvrant, notamment pour véhicule automobile, selon la revendication 1 et comprenant :
- un support (10) de poignée monté depuis l'intérieur de l'ouvrant et,
- une lunette montée depuis l'extérieur de l'ouvrant, la lunette étant fixée au support (10) de poignée depuis un dégagement de l'ouvrant.

Selon l'invention, le support (10) de poignée comprend ladite poignée, et la lunette s'étend par un guide vers l'intérieur de l'ouvrant qui comporte une ouverture pour permettre l'accès par une main à ladite poignée.

Selon l'invention, la lunette comprend des éléments de retenue prévus pour s'engager avec des éléments de retenue complémentaires du support (10) de poignée.

La lunette et le support (10) de poignée sont avantageusement solidarisés de sorte qu'il n'y ait aucun mouvement relatif l'une à l'autre. Contrairement à la lunette, la poignée est mobile par rapport au support (10) de poignée. La lunette forme un cache monté fixe sur l'ouvrant pour permettre de masquer visuellement la poignée. La lunette permet alors de protéger la poignée tout en assurant son accès. Pour accéder à la poignée, l'utilisateur insère une main dans la lunette. Le guide de la lunette en forme de bol permet de guider la main de l'utilisateur dans l'ouverture de la lunette pour l'accès à la poignée. Lorsque le dispositif de poignée est actionné, la poignée s'engage à l'intérieur de l'ouvrant. Ainsi, la poignée peut être actionnée par l'utilisateur dans un mouvement d'ouverture naturel sans qu'elle soit visible par ce dernier. Contrairement à l'art antérieur connu, la poignée est comprise à l'intérieur de l'ouvrant.

Par ailleurs, un tel dispositif permet avantageusement de simplifier l'assemblage et les éléments mécaniques et électriques généralement prévus pour les poignées « Flush ».

Selon une caractéristique avantageuse de l'invention, l'ouverture est formée sur une paroi supérieure du guide de la lunette.

Une telle disposition de l'ouverture permet, d'une part d'accompagner la main de l'utilisateur dans un mouvement de bascule de bas en haut pour permettre la préhension de la poignée en vue de permettre l'ouverture de l'ouvrant et, d'autre part de protéger des intempéries la poignée et les différents éléments constitutifs du dispositif de poignée.

Le dispositif de poignée conforme à l'invention peut comprendre avantageusement au moins l'un des perfectionnements ci-dessous, les caractéristiques techniques formant ces perfectionnements pouvant être prises seules ou en combinaison :
- la poignée est formée par un volet mobile,
- le volet mobile est guidé en rotation autour d'un axe horizontal,
- le volet mobile permet l'actionnement d'un levier par l'intermédiaire d'un élément d'actionnement orienté selon un axe vertical,
- le volet mobile porte un élément de commande électrique accessible par la main,
- la lunette comprend une partie arrière vue pour recevoir en correspondance un boîtier d'une unité de contrôle,
- l'unité de contrôle est une carte de circuit imprimé prise entre la partie arrière de la lunette et le boîtier de la carte de circuit imprimé,
- le dispositif de poignée comprend un élément de détection de la présence de la main dans une zone de détection en regard de l'ouverture de la lunette,
- l'élément de détection est un capteur capacitif relié électriquement à l'unité de contrôle et disposé sur une paroi inférieure opposée à la paroi supérieure en regard de l'ouverture,
- la lunette comprend une face avant depuis laquelle s'étend son guide et en ce que l'unité de contrôle est reliée électriquement à une antenne radiofréquence, l'antenne prenant la forme de la lunette depuis l'unité de contrôle jusqu'à une face opposée à ladite face avant,
-
- le dispositif de poignée comprend un élément d'émission lumineux porté par le volet mobile pour être disposé en regard de l'ouverture.

D'autres aspects, buts et avantages de l'invention apparaîtront à la lecture de la description détaillée suivante de formes de réalisation préférées de celle-ci, donnée à titre d'exemple non limitatif et faite en référence aux dessins annexés sur lesquels :
- la figure 1 représente une vue en perspective d'un dispositif de poignée selon l'invention formé d'un support de poignée et d'une lunette montés sur un ouvrant,
- la figure 2 représente une vue en perspective du dispositif de la figure 1 sans l'ouvrant,
- la figure 3 représente une vue arrière du dispositif représenté à la figure 2,
- la figure 4 représente une vue en perspective de l'arrière de la lunette,
- la figure 5 représente une vue éclatée du support de poignée portant la poignée formée par un volet mobile,
- les figures 6A et 6B représentent une vue en coupe du dispositif de poignée selon l'invention illustrant le mouvement d'une main d'un utilisateur pour permettre l'ouverture de l'ouvrant,
- la figure 6C représente une vue agrandie de la partie arrière du support illustrant le mouvement du levier lorsque le volet mobile est actionné,
- les figures 7A à 7D représentent différentes vues agrandies de la partie arrière du support illustrant le montage d'un mécanisme de verrou sur le support de poignée,
- la figure 8 représente une vue en perspective détaillée du dispositif de poignée selon l'invention qui est équipé d'un élément de commande électrique,
- la figure 9 représente un mode de réalisation particulier de l'élément de commande électrique,
- la figure 10 représente une vue en perspective d'une unité de contrôle reliée électriquement à une antenne radiofréquence et à un élément de détection de la présence d'une main dans la lunette,
- la figure 11 représente une vue en perspective d'un boîtier de l'unité de contrôle équipé de cette dernière,
- la figure 12 représente une vue en perspective du dispositif de poignée selon l'invention équipé de l'unité de contrôle et de son boîtier.
- la figure 13 représente une vue en perceptive du volet mobile équipé d'un élément d'émission lumineux,
- la figure 14 représente une vue en coupe similaire aux figures 6A et 6B pour illustrer le fonctionnement de l'élément d'émission lumineux.

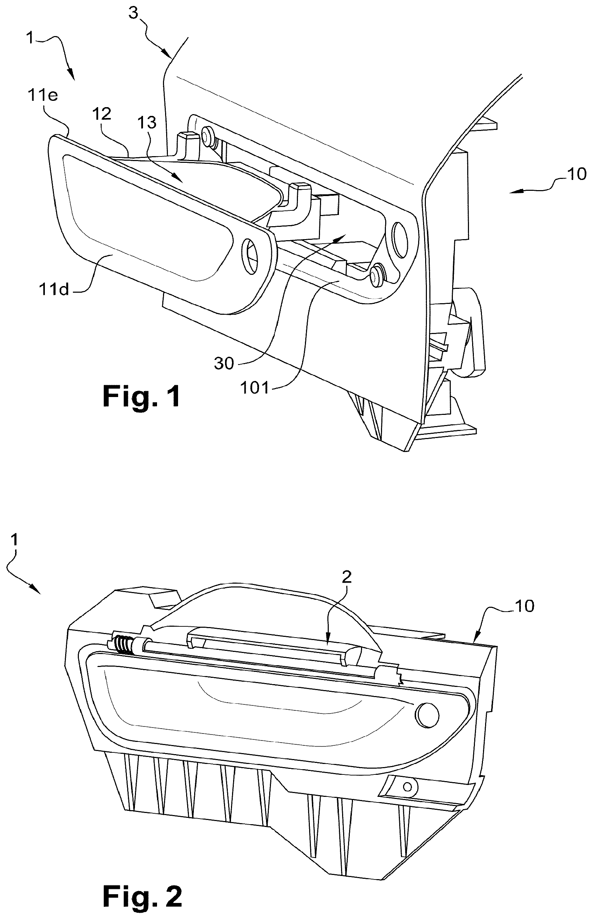

A la figure 1, on a représenté le dispositif 1 de poignée 2 (voir figure 2) selon un mode de réalisation préféré de l'invention. Le dispositif 1 de poignée 2 est assemblé en deux parties en regard d'un dégagement 30 d'un ouvrant 3, ici représenté par un panneau de carrosserie. Une première partie montée depuis l'intérieur de l'ouvrant 3 est formée d'un support 10 de poignée 2 du dispositif 1 portant la poignée 2. On définit l'intérieur de l'ouvrant comme étant la partie correspondant à l'habitacle du véhicule par opposition à l'extérieur de l'ouvrant. La poignée 2 est montée mobile par rapport au support 10 de poignée 2. Une deuxième partie montée depuis l'extérieur de l'ouvrant 3 est formée d'une lunette 11.

La lunette 11 comporte une face avant 11d, de préférence plane, depuis laquelle s'étend vers l'intérieur de l'ouvrant 3 un guide 12. Le guide 12 prend avantageusement la forme d'un bol et comporte une ouverture 13 formée sur une paroi supérieure 11a du guide 12. L'ouverture 13 est dimensionnée pour permettre le passage d'une main.

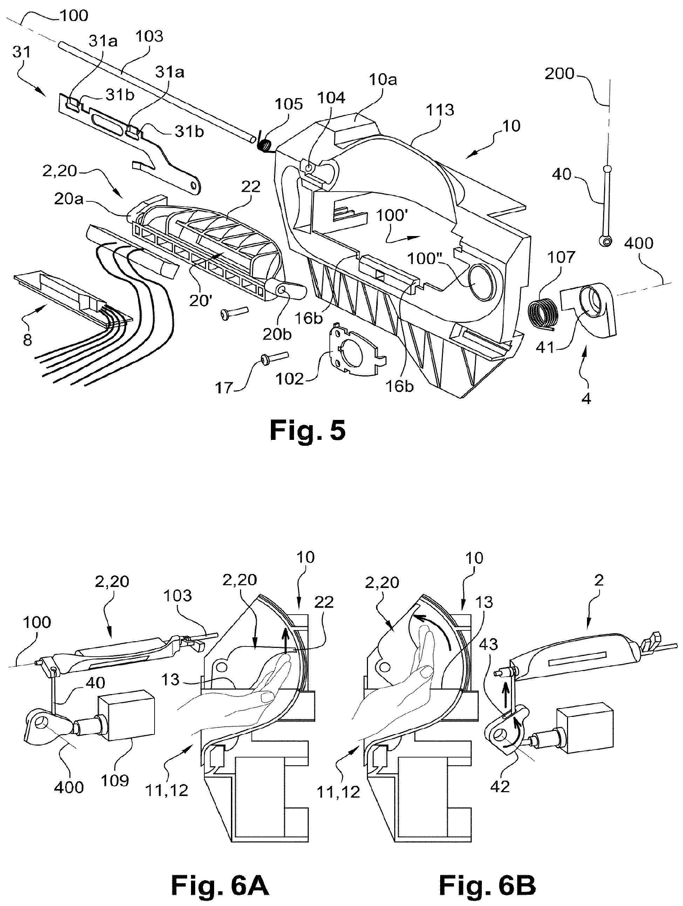

Dans une première étape d'assemblage, le support 10 de poignée 2 portant la poignée 2 est fixé sur l'ouvrant 3 à l'aide d'une série de vis de fixation 17 (figure 5) en correspondance de trous et d'alésages, respectivement de l'ouvrant 3 et du support 10 de poignée 2. Dans une deuxième étape d'assemblage représentée à la figure 2, la lunette 11 est insérée dans le dégagement 30 de l'ouvrant 3 pour s'étendre à l'intérieur de ce dernier. A l'état assemblé, la poignée 2 est en regard de l'ouverture 13 du guide 12 de la lunette 11 permettant ainsi l'accès par une main depuis la lunette 11 pour atteindre la poignée 2, tel que cela est représenté aux figures 6a et 6b.

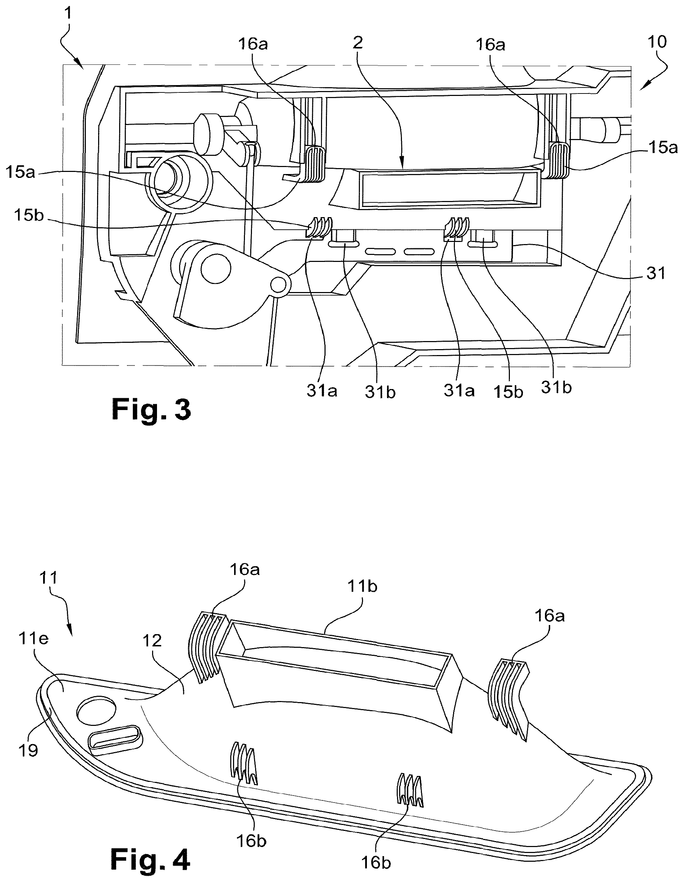

En se référant aux figures 3 et 4, la lunette 11 porte des éléments de retenue 15a, 15b prévus pour s'engager avec des éléments de retenue complémentaires 16a, 16b du support 10 de poignée 2. Plus particulièrement, des premiers éléments de retenue 15a, 16a sont formés par des doigts supérieurs 15a configurés pour s'engager dans des fentes 16a formées sur le support 10 de poignée 2 afin de maintenir la lunette 11 sur le support 10 de poignée 2 dans une position prédéterminée. Cette position prédéterminée permet le positionnement de l'ouverture 13 en regard de la poignée 2. Des deuxièmes éléments de retenue 15b, 16b sont formés par des doigts inférieurs 15b configurés pour s'insérer dans des encoches 16b (figure 5) du support 10. Une plaque de renfort 31 est avantageusement prévue pour être appliquée sur le support 10 de poignée 2 depuis l'intérieur de l'ouvrant 3. La plaque de renfort 31 comporte des logements 31a successifs à des encoches 31b. Une fois la plaque 31 disposée sur le support 10, les deuxièmes éléments de retenue 15b de la lunette 11 font saillie des encoches 31b de la plaque de renfort 31. La plaque de renfort 31 est alors tirée (en étant appuyée sur le support 10 de sorte à faire correspondre les logements 31a de la plaque de renfort 31 et les deuxièmes éléments de retenue 15b de la lunette 11. La plaque de renfort 31 permet alors un montage serré de la lunette 11 sur le support 10 de poignée 2.

En référence aux figures 1 et 4, un joint d'étanchéité 19 est prévu pour être disposé entre la lunette 11 et le support 10 de poignée 2. Plus particulièrement, le joint d'étanchéité 19 est prévu pour suivre le contour d'une face 11e de la lunette 11 opposée à la face avant 11d et une partie de réception 101 du support 10 de poignée 2 recevant ladite face 11e opposée. Le joint 19 assure alors l'étanchéité entre la lunette 11 et le support 10.

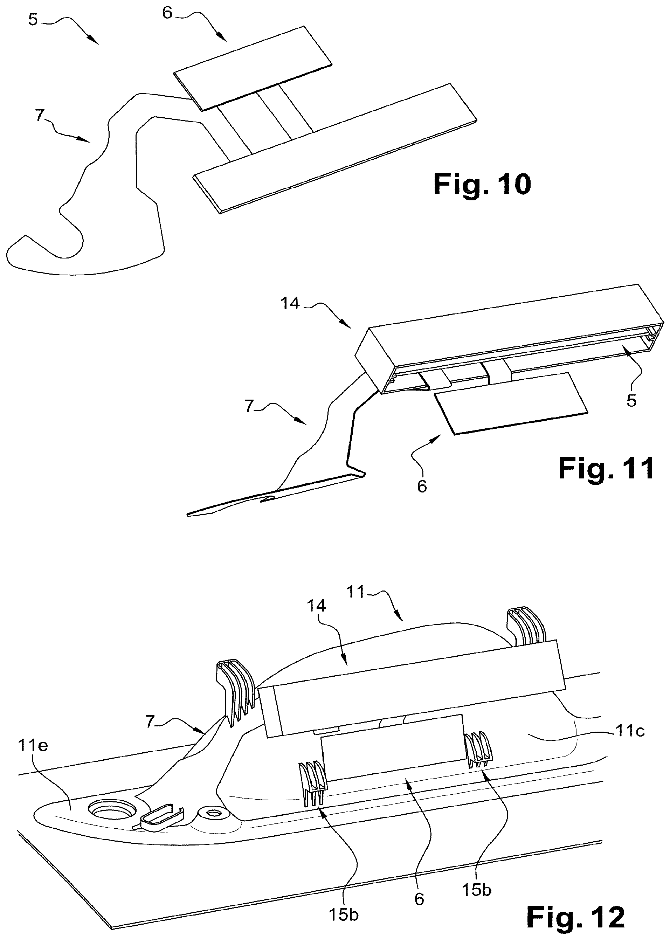

A la figure 4, on a représenté le guide 12 de la lunette 11 comportant une partie arrière 11b de forme rectangulaire prévu pour supporter une unité de contrôle 5 illustrée à la figure 10. La partie arrière 11b de la lunette 11 est représentée ouverte mais comporte, de préférence, un couvercle fermant son accès. En variante, la partie arrière 11b est fermée par la réalisation de la lunette 11 en une seule pièce.

A la figure 5, on a représenté plus en détail le support 10 de poignée 2 du dispositif 1 de poignée 2. Le support 10 de poignée 2 est formé d'un corps 10a comprenant un passage 100' prévu pour l'insertion de la lunette 11 et un trou 100" d'assemblage d'un mécanisme de verrou assemblé à l'aide d'une plaque de fixation 102. Le support 10 de poignée 2 est prévu pour recevoir la poignée 2 du dispositif 1 de sorte que la poignée 2 soit entièrement portée par son support 10. Lorsque le dispositif 1 de poignée 2 est actionné, la poignée 2 s'engage à l'intérieur de l'ouvrant 3. De façon non limitative, la poignée 2 est formée par un volet mobile 20 comportant une languette 22. La languette 22 de la poignée 2 s'étend vers l'intérieur de l'ouvrant 3. Le volet mobile 20 est monté en pivotement sur le support 10 de poignée 2. Le pivotement est assuré par une tige 103 longitudinale articulée par ses extrémités sur le support 10. Une partie supérieure bombée 113 du support 10 permet la mobilité du volet 20.

Pour faciliter la compréhension de l'invention, on interprètera par les termes « horizontal », « vertical » et « transversal » comme étant en rapport respectivement aux références « 100 », « 200 » et « 400 » telles que représentées en figure 5.

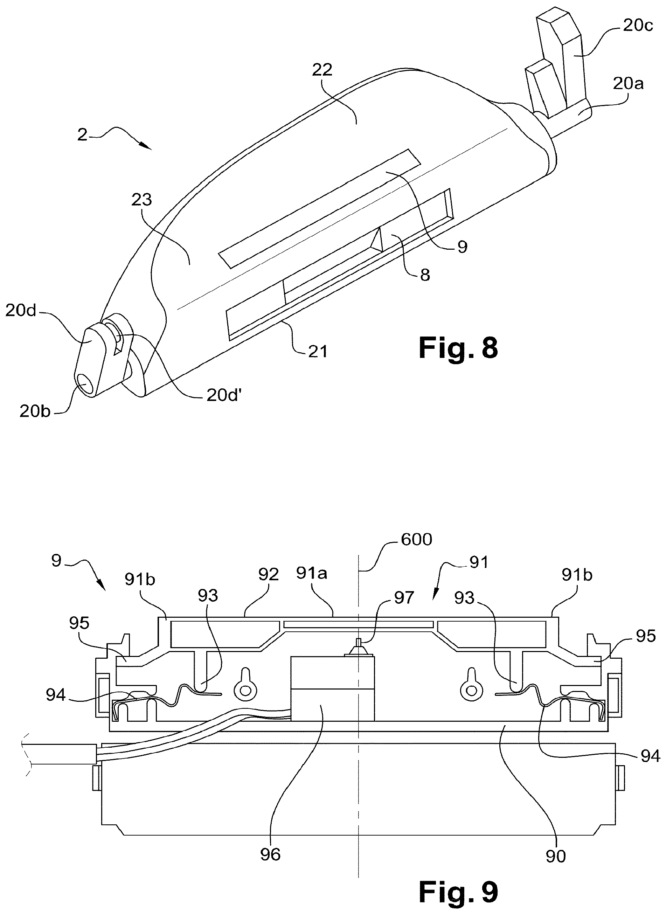

En se référant aux figures 5 et 8 ensemble, le volet mobile 20 comprend à ses extrémités des saillies tubulaires 20a, 20b qui s'étendent longitudinalement. La tige 103 est prévue pour s'enfiler dans les saillies tubulaires 20a, 20b du volet mobile 20. Les extrémités de la tige 103 sont ensuite reçues dans des guides cylindriques 104 de support 10 de poignée 2 et les saillies tubulaires 20a, 20b sont reçues en correspondance sur le support 10. La tige 103 guide alors le volet mobile 20 en rotation autour d'un axe horizontal 100.

La tige 103 porte un ressort hélicoïdal 105 à action angulaire permettant le retour du volet mobile 20 vers sa position de repos. Pour cela, le ressort 105 prend appui par une extrémité sur le support 10 et par une autre extrémité sur le volet mobile 20.

L'une des saillies tubulaires 20a du volet mobile 20 comporte un bras de blocage 20c. Le bras de blocage 20c s'étend perpendiculairement à une direction longitudinale de la saillie tubulaire 20a auquel il est associé. Le bras de blocage 20c permet la mise en butée du volet mobile 20 dans une position de fin de course du volet mobile 20. Ainsi, dans cette position de fin de course, le bras de blocage 20c vient en butée contre le support 10 et bloque en rotation le volet mobile 20.

L'autre saillie tubulaire 20b du volet mobile 20 comporte un bras de commande 20d. Le bras de commande 20d s'étend également perpendiculairement à une direction longitudinale de la saillie tubulaire 20b auquel il est associé. Le bras de commande 20d permet l'actionnement d'un levier 4 par l'intermédiaire d'un élément d'actionnement 40, dit premier élément d'actionnement 40. L'élément d'actionnement 40 est préférentiellement orienté selon un axe vertical 200. Cet élément d'actionnement 40 est ici formé par une barre longitudinale portant à chacune de ses extrémités une rotule.

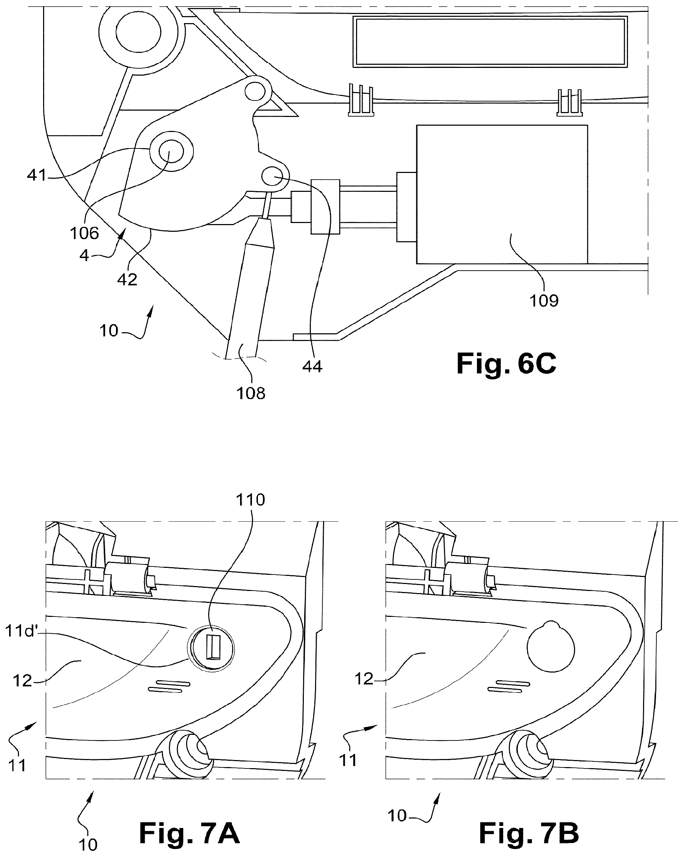

Le levier 4 comporte un élément de liaison annulaire 41 prévu pour être monté sur un ergot de fixation 106 du support 10 de poignée 2 tel que représenté en figure 6C. L'élément de liaison 41 permet de guider en rotation le levier 4. Le levier 4 s'étend radialement depuis l'élément de liaison annulaire 41 par une portion angulaire 42. Un ajour linéaire 43 (représenté en figure 6B) formé dans la portion angulaire 42 permet de guider la course de la barre longitudinale.

La liaison annulaire 41 du levier 4 porte un ressort hélicoïdal 107 à action angulaire permettant de guider le levier 4 vers une position correspondant à la position de repos du volet mobile 20.

On comprendra que le levier 4 est guidé par l'élément de liaison annulaire 41 autour d'un axe transversal 400. L'axe transversal 400 est perpendiculaire à chacun des axes horizontal 100 et vertical 200.

Une extrémité de l'élément d'actionnement 40 est insérée dans la portion angulaire 42 du levier 4 pour émerger depuis l'ajour linéaire 43. L'extrémité insérée de l'élément d'actionnement 40 vient alors s'emmancher dans une fente 20d' formée en bout du bras de commande 20d, de sorte que l'extrémité émergeante permet sa retenue dans au moins une direction. L'extrémité opposée de l'élément d'actionnement 40 est emmanchée dans la portion angulaire 42 avec une partie complémentaire à la rotule associée à cette l'extrémité pour former une liaison rotule.

L'élément d'actionnement 40 peut ainsi être manœuvré sans contraindre mécaniquement le volet mobile 20 et le levier 4.

Par ailleurs, on a représenté un élément de commande électrique 9 et un élément d'émission lumineux 8 portés par le volet mobile 20 qui seront décrits plus en détail ultérieurement.

Aux figures 6A et 6B, on a représenté un premier mode d'ouverture de l'ouvrant 3. Ce premier mode d'ouverture est réalisé mécaniquement à l'aide du volet mobile 20. La figure 6A représente le volet mobile 20 dans une position de repos, alors que la figure 6B représente le volet mobile 20 dans une position active. Lorsqu'une main est insérée dans la lunette 11, la forme en bol de la lunette 11 guide 12 la main vers l'ouverture 13 de la paroi supérieure 11a. La main traverse alors l'ouverture 13 pour venir chercher la languette 22 du volet mobile 20 par les extrémités des doigts de la main. L'appui des doigts de la main sur la languette 22 accompagnant le mouvement de la main provoque le pivotement du volet mobile 20 autour de l'axe horizontal 100 à l'aide de la tige 103 prévue à cet effet. Le volet mobile 20 est alors poussé à l'intérieur de l'ouvrant 3. L'élément d'actionnement 40 relié au bras de commande 20d du volet mobile 20 actionne alors le levier 4 qui est entraîné en rotation autour de son axe transversal 400.

A la figure 6C, on a représenté plus en détail le levier 4. Le levier 4 porte sur sa portion angulaire 42 une accroche 44 destinée à recevoir l'extrémité d'un câble de commande flexible 108, aussi nommé « câble Bowden ». L'extrémité opposée du câble de commande 108 permet le déverrouillage d'une gâchette en feuillure de l'ouvrant 3 en vue de son ouverture 13.

Le bras de blocage 20c et le bras de commande 20d sont avantageusement radialement décalés l'un par rapport à l'autre. Ce décalage radial des bras 20c, 20d permet de contrôler le mouvement angulaire du levier 4 de sorte que la course du câble de commande 108 est avantageusement contrôlée pour permettre un déplacement maximum du câble de commande flexible de 29mm.

La figure 6C représente par ailleurs, un actionneur électrique 109 configuré pour actionner électriquement le levier 4 tel qu'il sera décrit ultérieurement.

Ce premier mode d'ouverture mécanique permet avantageusement de ne pas solliciter l'actionneur électrique 109. Il peut donc s'agir d'une solution de repli, au cas où l'actionneur serait défectueux.

Aux figures 7A et 7B, on a représenté un agrandissement d'une partie avant du support 10 de poignée 2 équipé du mécanisme de verrou 110. La face avant 11d de la lunette 11 comporte un trou 11d' pour l'accès au mécanisme de verrou 110 via le trou 100" du support 10. Un cache peut avantageusement être prévu pour masquer l'accès au mécanisme de verrou 110 lorsque celui-ci n'est pas utilisé. Ce cache peut, par exemple, prendre une forme arrondie suivant la forme du trou 11d' de la lunette 11 et il est monté pivotant sur la lunette 11 par une partie faisant saillie.

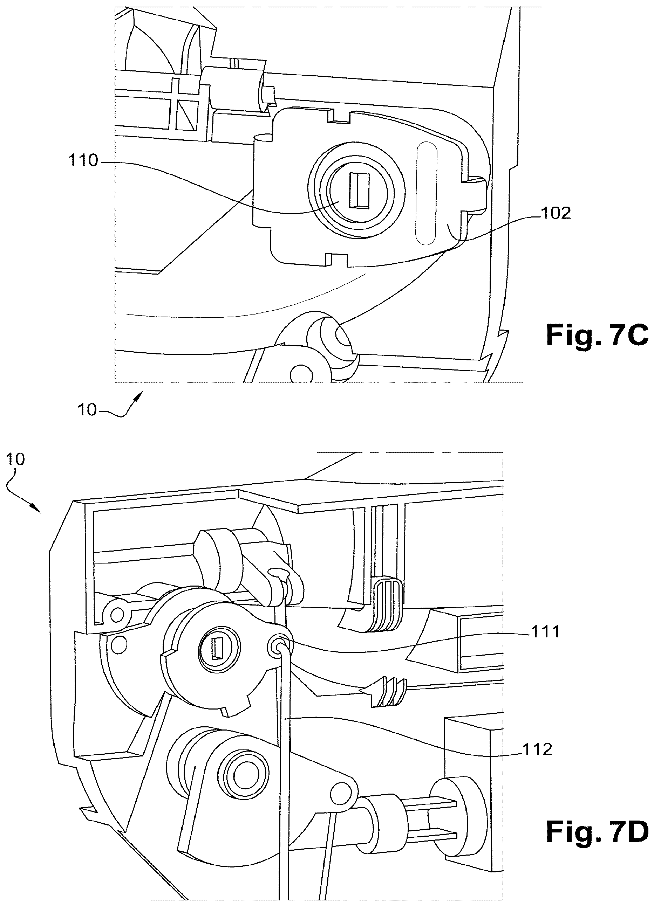

Aux figures 7C et 7D, on a représenté un agrandissement d'une partie arrière du support 10 de poignée 2 représenté à la figure 7B. Le mécanisme de verrou 110 est assemblé sur le support 10 de poignée 2 à l'aide de la plaque de fixation 102, cette plaque 102 sert de protection en bloquant l'accès au mécanisme aval du verrou derrière ladite plaque. Par ailleurs, le verrou du mécanisme 110 comporte un bras de déverrouillage 111 relié à un élément d'actionnement 112, dit deuxième élément d'actionnement 112. Cet élément d'actionnement 112est formé par une barre longitudinale reliant le bras de déverrouillage 111 du mécanisme de verrou 110 à une serrure en feuillure de l'ouvrant 3 en vue de son déverrouillage.

A la figure 8, on a représenté une vue plus détaillée de la poignée 2 formée par le volet mobile 20. Le volet mobile 20 comporte une partie centrale 21 depuis laquelle s'étendent la languette 22 et qui s'étend latéralement par les saillies tubulaires 20a, 20b. La partie centrale 21 et la languette 22 du volet mobile 20 sont délimitées par une zone courbe 23 qui comporte l'élément de commande électrique 9 monté sur le volet mobile 20 depuis un passage 20' formé sur ce dernier, tel que représenté en figure 5. L'élément de commande électrique 9 prend ici la forme d'un interrupteur électrique. Cet élément de commande électrique 9 permet l'actionnement de l'actionneur électrique 109 du levier 4. La zone courbe 23 du volet mobile 20 permet avantageusement la saisie du volet mobile 20 par la main pour être tiré vers l'utilisateur. La disposition avantageuse de l'élément de commande électrique 9 sur la zone courbe 23 du volet mobile 9 permet ainsi de faciliter le mouvement d'ouverture de l'ouvrant 3 par l'utilisateur.

On va décrire ci-après un deuxième mode d'ouverture de l'ouvrant 3. Ce deuxième mode d'ouverture est réalisé électriquement à l'aide de l'élément de commande électrique 9.

L'ouverture électrique de l'ouvrant 3 est réalisée de la façon suivante. Lorsqu'un utilisateur insère sa main dans la lunette 11 et accède par l'ouverture 13 de la lunette 11 prévue à cet effet au volet mobile 20, celui-ci presse d'abord par les doigts de sa main l'élément de commande électrique 9 en amenant sa main vers lui commandant ainsi le déverrouillage de la gâchette de l'ouvrant 3. Puis, une fois l'élément de commande électrique 9 pressé, les doigts de l'utilisateur viennent s'appuyer sur la portion courbe pour tirer la poignée 2 vers l'utilisateur et ouvrir l'ouvrant 3.

La commande de l'actionneur 109 par l'élément de commande électrique 9 est réalisée par l'intermédiaire de l'unité de contrôle 5 qui sera décrite plus en détail ultérieurement.

A la figure 9, on a représenté un mode particulier de l'élément de commande électrique 9. L'élément de commande électrique 9 comprend un corps 90 sur lequel est monté mobile une manette 91. Le corps 90 est fixe par rapport au support 10. Une face 92 de la manette 91 accessible par l'utilisateur est de forme rectiligne. La manette 91 s'étend à l'intérieur du corps 90 par deux pattes 93, chacune en appui sur un élément à ressort 94. Les pattes 93 de la manette 91 et les éléments à ressort 94 sont avantageusement disposés en symétrie les uns par rapport aux autres selon un axe 600 passant au centre de la manette 91. Des bras de guidage 95 de la manette 91 s'étendent latéralement depuis celle-ci pour prendre appui contre le corps 90 de l'élément de commande électrique 9. Un micro-interrupteur 96 est placé en regard d'une partie centrale 91a de la manette 91. Le micro-interrupteur 96 comporte une tige poussoir 97 en contact avec la partie centrale 91a de la manette. Avantageusement, la tige poussoir 97 est disposée de sorte qu'elle coupe l'axe 600 de symétrie de la manette 91.

Lorsque l'élément de commande électrique 9 est actionné par la main d'un utilisateur, ce mode particulier de l'élément de commande électrique 9 permet le déclanchement du micro-interrupteur 96 par sa tige poussoir 97 quel que soit l'appui de la main de l'utilisateur sur la partie centrale 91a de la manette 91 ou encore sur les extrémités 91b de la manette 91.

Aux figures 10 à 12, on a représenté l'unité de contrôle 5. Même si cela n'est pas représenté, l'unité de contrôle 5 est reliée électriquement à l'élément de commande électrique 9 ainsi qu'à l'actionneur électrique 109.

L'unité de contrôle 5 prend la forme d'une carte de circuit imprimé, préférentiellement de forme rectangulaire. L'unité de contrôle 5 est également reliée électriquement à un élément de détection 6 de la présence d'une main dans la lunette 11. Un boîtier 14 est prévu pour recevoir l'unité de contrôle 5. A titre d'exemple, l'élément de détection 6 est un capteur capacitif et il est de forme plane. Ce boîtier 14 est avantageusement formé d'une enveloppe rectangulaire prévue pour être porté par la partie arrière 11b de la lunette 11. Le boîtier 14 est alors disposé sur un contour de la partie arrière 11b de la lunette 11 de forme en correspondance. L'unité de contrôle 5 est alors prise entre le boîtier 14 et la partie arrière 11b de la lunette 11. A l'état assemblé de l'unité de contrôle 5, l'élément de détection 6 s'étend sur une paroi inférieure 11c du guide 12 et se loge avantageusement entre les deuxièmes éléments de retenue 15b de la lunette 11 pour assurer son maintien. L'élément de détection 6 est alors en regard de l'ouverture 13 de la lunette 11.

L'élément de détection 6 permet un troisième mode d'ouverture de l'ouvrant 3. En l'occurrence, lorsque la main de l'utilisateur est insérée dans la lunette 11 et arrive en regard de son ouverture 13, l'élément de détection 6 identifie la présence de la main, par exemple dans le cas d'un capteur capacitif par une perturbation du champ magnétique émis par le capteur du fait de la présence de la main.

Une antenne radiofréquence 7 est également représentée dans les figures 10 à 12. Cette antenne 7 est avantageusement flexible pour prendre la forme de la lunette 11. Elle s'étend depuis l'unité de contrôle 5 à laquelle elle est reliée, jusqu'à la face 11e qui est opposée à la face avant 11d de la lunette 11 pour permettre la réception de signaux. Une telle antenne 7 permet un quatrième mode d'ouverture de l'ouvrant 3 dans lequel lorsque l'utilisateur commande à distance par une télécommande l'ouverture 13 de l'ouvrant 3, un signal radiofréquence reçu par l'antenne est transformé en signal électrique envoyé à l'unité de contrôle 5. L'unité de contrôle 5 commande alors électriquement l'actionneur électrique 109 pilotant le levier 4.

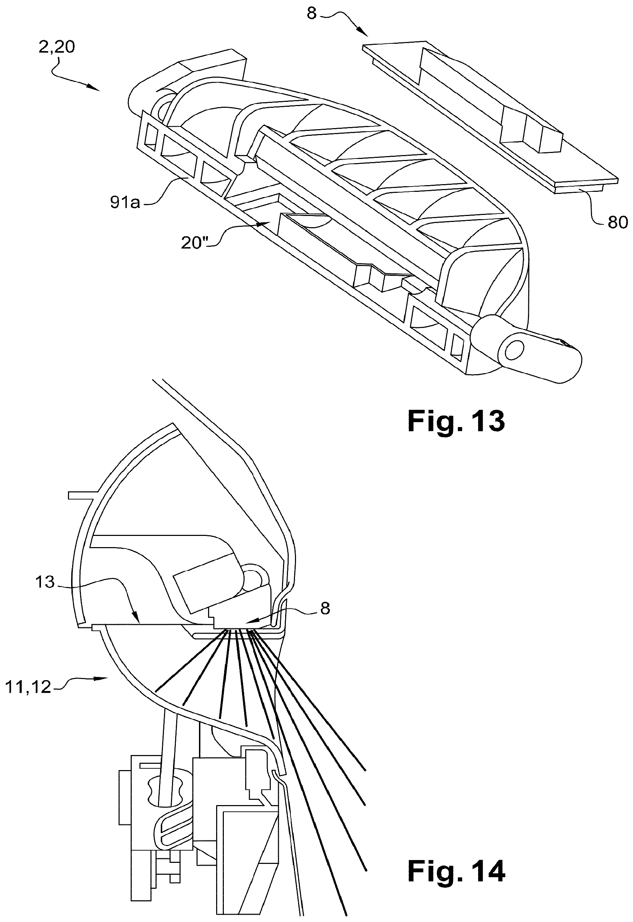

Aux figures 13 et 14, on a représenté le volet mobile 20 sur lequel est monté un élément d'émission lumineux 8. L'élément d'émission lumineux 8 est formé par des sources lumineuses dirigées vers un guide de projection 80 de lumière. Une découpe 20" est prévue sur la partie centrale 91a du volet mobile 20 pour recevoir l'élément d'émission lumineux 8. A l'état assemblé, l'élément d'émission lumineux 8 est porté par le volet mobile 20 face à l'ouverture 13 de la lunette 11.

L'élément d'émission lumineux 8 est relié électriquement à l'unité de contrôle 5. En pratique, l'élément d'émission lumineux 8 émet des rayons lumineux en direction de l'ouverture 13 de la lunette 11. Ces rayons lumineux sont avantageusement réfléchis par la forme en bol du guide 12 de la lunette 11 et émis vers l'extérieur de l'ouvrant 3. On comprendra qu'un tel élément d'émission lumineux 8 fournit à l'utilisateur une indication sur l'état ouvert ou fermé de l'ouvrant 3. Par exemple, lorsque l'utilisateur réalise l'un des modes d'ouverture précédent, l'élément d'émission lumineux 8 émet une lumière verte. Au contraire, lorsqu'une commande de fermeture est reçue, l'élément d'émission lumineux 8 émet une lumière rouge.

Bien évidemment, l'invention n'est pas limitée aux exemples qui viennent d'être décrits et de nombreux aménagements peuvent être apportés à ces exemples sans sortir de la portée de l'invention telle que définie par les revendications annexées.

## Revendications

1. Dispositif (1) de poignée (2) d'ouvrant (3), notamment pour véhicule automobile, comprenant :
- un support (10) de poignée (2) monté depuis l'intérieur de l'ouvrant (3) et,
- une lunette (11) montée depuis l'extérieur de l'ouvrant (3),
- la lunette (11) étant fixée au support (10) de poignée (2) depuis un dégagement (30) de l'ouvrant (3),
le support (10) de poignée (2) comprenant ladite poignée (2), et la lunette (11) s'étendant par un guide (12) vers l'intérieur de l'ouvrant (3) qui comporte une ouverture (13) pour permettre l'accès par une main à ladite poignée (2)
**caractérisé en ce que** la lunette (11) porte des éléments de retenue (15a, 15b) prévus pour s'engager avec des éléments de retenue complémentaires (16a, 16b) du support (10) de poignée (2), des premiers éléments de retenue (15a) étant formés par des doigts supérieurs (15a) configurés pour s'engager dans des fentes (16a) des éléments de retenue complémentaires (16a, 16b) formées sur le support (10) de poignée (2) afin de maintenir la lunette (11) sur le support (10) de poignée (2) dans une position prédéterminée et des deuxièmes éléments de retenue (15b) étant formés par des doigts inférieurs (15b) configurés pour s'insérer dans des encoches (16b) des éléments de retenue complémentaires (16a, 16b) du support (10).

2. Dispositif de poignée (2) selon la revendication précédente, **caractérisé en ce que** l'ouverture (13) est formée sur une paroi supérieure (11a) du guide (12) de la lunette (11).

3. Dispositif de poignée (2) selon l'une quelconque des revendications précédentes, **caractérisé en ce que** la poignée (2) est formée par un volet mobile (20).

4. Dispositif de poignée (2) selon la revendication précédente, **caractérisé en ce que** le volet mobile (20) est guidé en rotation autour d'un axe horizontal (100).

5. Dispositif de poignée (2) selon la revendication précédente, **caractérisé en ce que** le volet mobile (20) permet l'actionnement d'un levier (4) par l'intermédiaire d'un élément d'actionnement (40) orienté selon un axe vertical (200).

6. Dispositif de poignée (2) selon l'une quelconque des revendications 3 à 5, **caractérisé en ce que** le volet mobile (20) porte un élément de commande électrique (9) accessible par la main.

7. Dispositif de poignée (2) selon l'une quelconque des revendications précédentes, **caractérisé en ce que** la lunette (11) comprend une partie arrière (11b) prévue pour recevoir en correspondance un boîtier (14) d'une unité de contrôle (5).

8. Dispositif de poignée (2) selon la revendication précédente, **caractérisé en ce que** l'unité de contrôle (5) est une carte de circuit imprimé et prise entre la partie arrière (11b) de la lunette (11) et le boîtier (14) de la carte de circuit imprimé.

9. Dispositif de poignée (2) selon l'une quelconque des revendications précédentes, **caractérisé en ce qu'**il comprend un élément de détection (6) de la présence de la main dans une zone de détection (500) en regard de l'ouverture (13) de la lunette (11).

10. Dispositif de poignée (2) selon la revendication précédente prise en combinaison avec l'une quelconque des revendications 7 ou 8, **caractérisé en ce que** l'élément de détection (6) est un capteur capacitif relié électriquement à l'unité de contrôle (5) et disposé sur une paroi inférieure (11c) opposée à la paroi supérieure (11a) en regard de l'ouverture (13).

11. Dispositif de poignée (2) selon l'une quelconque des revendications 7, 8 ou 10, **caractérisé en ce que** la lunette (11) comprend une face avant (11d) depuis laquelle s'étend son guide (12) et **en ce que** l'unité de contrôle (5) est reliée électriquement à une antenne radiofréquence (7), l'antenne (7) prenant la forme de la lunette (11) depuis l'unité de contrôle (5) jusqu'à une face (11e) opposée à ladite face avant (11d).

12. Dispositif de poignée (2) selon l'une quelconque des revendications précédentes, **caractérisé en ce que** le dispositif de poignée (2) comprend un élément d'émission lumineux (8) porté par le volet mobile (20) pour être disposé en regard de l'ouverture (13).

## Patentansprüche

1. Vorrichtung (1) eines Griffes (2) einer Öffnungseinrichtung (3), insbesondere für ein Kraftfahrzeug, umfassend:
- eine von der Innenseite der Öffnungseinrichtung (3) montierte Stütze (10) eines Griffes (2) und,
- eine von der Außenseite der Öffnungseinrichtung (3) montierte Lünette (11),
- wobei die Lünette (11) von einer Aussparung (30) der Öffnungseinrichtung (3) aus an der Stütze (10) eines Griffes (2) befestigt ist,
die Stütze (10) eines Griffes (2), die den Griff (2) umfasst, und die Lünette (11), die sich durch eine Führung (12) ins Innere der Öffnungseinrichtung (3) erstreckt, die eine Öffnung (13) beinhaltet, um den Zugang zu dem Griff (2) mit einer Hand zu ermöglichen
**dadurch gekennzeichnet, dass** die Lünette (11) Rückhalteelemente (15a, 15b) trägt, die vorgesehen sind, um mit ergänzenden Rückhalteelementen (16a, 16b) der Stütze (10) eines Griffes (2) in Eingriff zu gelangen, wobei die ersten Rückhalteelemente (15a) durch obere Finger (15a) gebildet sind, die konfiguriert sind, um in Schlitze (16a) der ergänzenden Rückhalteelemente (16a, 16b) einzugreifen, die an der Stütze (10) eines Griffes (2) gebildet sind, um die Lünette (11) an der Stütze (10) eines Griffes (2) in einer vorbestimmten Position festzuhalten und zweite Rückhalteelemente (15b) durch untere Finger (15b) gebildet sind, die konfiguriert sind, um in Kerben (16b) der ergänzenden Rückhalteelemente (16a, 16b) der Stütze (10) eingeführt zu werden.

2. Griffvorrichtung (2) nach dem vorstehenden Anspruch, **dadurch gekennzeichnet, dass** die Öffnung (13) an einer oberen Wand (11a) der Führung (12) der Lünette (11) gebildet ist.

3. Griffvorrichtung (2) nach einem der vorstehenden Ansprüche, **dadurch gekennzeichnet, dass** der Griff (2) durch eine bewegliche Klappe (20) gebildet ist.

4. Griffvorrichtung (2) nach dem vorstehenden Anspruch, **dadurch gekennzeichnet, dass** die bewegliche Klappe (20) drehbar um eine horizontale Achse (100) drehgeführt ist.

5. Griffvorrichtung (2) nach dem vorstehenden Anspruch,**dadurch gekennzeichnet, dass** die bewegliche Klappe (20) die Betätigung eines Hebels (4) über ein gemäß einer vertikalen Achse (200) ausgerichtetes Betätigungselement (40) ermöglicht.

6. Griffvorrichtung (2) nach einem der Ansprüche 3 bis 5, **dadurch gekennzeichnet, dass** die bewegliche Klappe (20) ein mit der Hand zugängliches elektrisches Steuerelement (9) trägt.

7. Griffvorrichtung (2) nach einem der vorstehenden Ansprüche, **dadurch gekennzeichnet, dass** die Lünette (11) einen hinteren Teil (11b) umfasst, der vorgesehen ist, um als Entsprechung ein Gehäuse (14) einer Kontrolleinheit (5) aufzunehmen.

8. Griffvorrichtung (2) nach dem vorstehenden Anspruch, **dadurch gekennzeichnet, dass** die Kontrolleinheit (5) eine gedruckte Leiterplatte ist und zwischen dem hinteren Teil (11b) der Lünette (11) und dem Gehäuse (14) der gedruckten Leiterplatte gesteckt ist.

9. Griffvorrichtung (2) nach einem der vorstehenden Ansprüche, **dadurch gekennzeichnet, dass** sie ein Erkennungselement (6) des Vorhandenseins der Hand in einer Erkennungszone (500) gegenüber der Öffnung (13) der Lünette (11) umfasst.

10. Griffvorrichtung (2) nach dem vorstehenden Anspruch in Kombination mit einem der Ansprüche 7 oder 8, **dadurch gekennzeichnet, dass** das Erkennungselement (6) ein kapazitiver Sensor ist, der elektrisch mit der Kontrolleinheit (5) verbunden ist und an einer unteren Wand (11c) entgegengesetzt zur oberen Wand (11a) gegenüber der Öffnung (13) angeordnet ist.

11. Griffvorrichtung (2) nach einem der Ansprüche 7, 8 oder 10, **dadurch gekennzeichnet, dass** die Lünette (11) eine Vorderseite (11d) umfasst, von der aus sich ihre Führung (12) erstreckt, und dadurch, dass die Kontrolleinheit (5) elektrisch mit einer Funkfrequenzantenne (7) verbunden ist, wobei die Antenne (7) die Form der Lünette (11) von der Kontrolleinheit (5) bis zu einer der Vorderseite (11d) gegenüberliegenden Seite (11e) annimmt.

12. Griffvorrichtung (2) nach einem der vorstehenden Ansprüche, **dadurch gekennzeichnet, dass** die Griffvorrichtung (2) ein Lichtemissionselement (8) umfasst, die von der beweglichen Klappe (20) getragen wird, um gegenüber der Öffnung (13) angeordnet zu sein.

## Claims

1. A handle (2) device (1) for a door leaf (3), in particular for a motor vehicle, comprising:
- a handle (2) support (10) mounted from the inside of the door leaf (3) and,
- a bezel (11) mounted from the outside of the door leaf (3),
- the bezel (11) being fastened to the handle (2) support (10) from a recess (30) in the door leaf (3),
the handle (2) support (10) comprising said handle (2), and the bezel (11) extending through a guide (12) into the inside of the door leaf (3) which includes an opening (13) to allow access by one hand to said handle (2)
**characterized in that** the bezel (11) carries retaining elements (15a, 15b) provided to engage with complementary retaining elements (16a, 16b) of the handle (2) support (10), first retaining elements (15a) being formed by upper fingers (15a) configured to engage in slots (16a) of the complementary retaining elements (16a, 16b) formed on the handle (2) support (10) in order to hold the bezel (11) on the handle (2) support (10) in a predetermined position, and second retaining elements (15b) being formed by lower fingers (15b) configured to insert into notches (16b) of the complementary retaining elements (16a, 16b) of the support (10).

2. The handle (2) device according to the preceding claim, **characterized in that** the opening (13) is formed on an upper wall (11a) of the guide (12) of the bezel (11).

3. The handle (2) device according to any one of the preceding claims, **characterized in that** the handle (2) is formed by a movable flap (20).

4. The handle (2) device according to the preceding claim, **characterized in that** the movable flap (20) is guided in rotation about a horizontal axis (100).

5. The handle (2) device according to the preceding claim, **characterized in that** the movable flap (20) enables the actuation of a lever (4) by means of an actuating element (40) oriented along a vertical axis (200).

6. The handle (2) device according to any one of claims 3 to 5, **characterized in that** the movable flap (20) carries an electrical control element (9) accessible by hand.

7. The handle (2) device according to any one of the preceding claims, **characterized in that** the bezel (11) comprises a rear portion (11b) provided to receive, in correspondence therewith, a housing (14) of a control unit (5).

8. The handle (2) device according to the preceding claim, **characterized in that** the control unit (5) is a printed circuit board and is sandwiched between the rear portion (11b) of the bezel (11) and the housing (14) of the printed circuit board.

9. The handle (2) device according to any one of the preceding claims, **characterized in that** it comprises an element (6) for detecting the presence of the hand within a detection area (500) facing the opening (13) of the bezel (11).

10. The handle (2) device according to the preceding claim in combination with any one of claims 7 or 8, **characterized in that** the detection element (6) is a capacitive sensor electrically connected to the control unit (5) and disposed on a lower wall (11c) opposite the upper wall (11a) facing the opening (13).

11. The handle (2) device according to any one of claims 7, 8, or 10, **characterized in that** the bezel (11) comprises a front face (11d) from which its guide (12) extends, and **in that** the control unit (5) is electrically connected to a radio frequency antenna (7), the antenna (7) following the shape of the bezel (11) from the control unit (5) to a face (11e) opposite said front face (11d).

12. The handle (2) device according to any one of the preceding claims, **characterized in that** the handle (2) device comprises a light-emitting element (8) carried by the movable flap (20) to be disposed facing the opening (13).
